# EUROPEAN PATENT APPLICATION

(11) **EP 3 520 892 A1**
(43) Date of publication of application: **07.08.2019**
(21) Application number: 17856655.0
(22) Date of filing: 21.09.2017
(51) Int. Cl.: B01J 21/18, C01B 32/20, H01M 8/1004, H01M 4/92, B01J 37/08, H01M 8/1018

(54) **CARRIER, ELECTRODE FOR FUEL CELL, MEMBRANE-ELECTRODE ASSEMBLY, AND FUEL CELL COMPRISING SAME**

(30) Priority: 30.09.2016 KR 20160126266
(71) Applicant: Kolon Industries, Inc., Seoul 07793 (KR)
(72) Inventor: KIM, Jun-Young, Yongin-si Gyeonggi-do 16910 (KR); LEE, Jin-Hwa, Yongin-si Gyeonggi-do 16910 (KR)
(74) Representative: Ter Meer Steinmeister & Partner
(86) International application number: PCT/KR2017/010403
(87) International publication number: WO 2018/062769

(57) **Abstract**

The present invention provides a technology for: a highly crystalline graphitized carbon support including carbon particles including a highly crystalline graphitized layer, the highly crystalline graphitized layer comprising a functional group bonded to the surface thereof; an electrode for a fuel cell, the electrode including the support; a membrane-electrode assembly; and the fuel cell. The highly crystalline graphitized carbon support according to an embodiment of the present invention can improve performance of the fuel cell through the improvement of durability and electrochemical activity.

## Description

### [Technical Field]

The present invention relates to a support, an electrode for a fuel cell, an membrane-electrode assembly, and the fuel cell including the membrane-electrode assembly and, more preferably, is a technology for a support with excellent durability capable of being applied to a fuel cell vehicle (FCV), an electrode for a fuel cell, the electrode including the support, a membrane-electrode assembly, and the fuel cell.

### [Background Art]

A fuel cell, as a battery including a power generation system which directly converts chemical reaction energy such as oxidation/reduction reaction of hydrogen and oxygen contained in a hydrocarbon-based fuel material such as methanol, ethanol or a natural gas, has been spotlighted as a next generation clean energy source capable of replacing fossil energy due to its high energy efficiency and environmentally friendly properties such as less contaminant discharging properties.

Such a fuel cell has an advantage that it can exhibit various ranges of outputs through a stack configuration by stacking of unit cells, and the fuel cell can exhibit an energy density 4 to 10 times higher than a small lithium battery. Therefore, the fuel cell has been receiving attention as a small and mobile portable power supply.

A stack which substantially generates electricity in the fuel cell has a structure in which several to tens of unit cells comprised of a membrane-electrode assembly (MEA) and separators (or referred to as "bipolar plates") are stacked, and the membrane-electrode assembly generally has a structure in which an oxidation electrode (an anode or a fuel electrode) and a reduction electrode (a cathode or an air electrode) are each formed at both sides of an electrolyte membrane.

The fuel cell may be divided into an alkaline electrolyte fuel cell, a polymer electrolyte membrane fuel cell (PEMFC), and the like according to state of electrolyte. The polymer electrolyte membrane fuel cell among the alkaline electrolyte fuel cell, the polymer electrolyte membrane fuel cell and the like has been spotlighted as a portable, automobile or household power supply device due to advantages including a low operating temperature of less than 100 °C, fast starting and response characteristics, excellent durability and the like.

Typical examples of the polymer electrolyte membrane fuel cell may include a proton exchange membrane fuel cell (PEMFC) using hydrogen gas as fuel, a direct methanol fuel cell (DMFC) using a liquid methanol as fuel, and the like.

Reaction which occurs in the polymer electrolyte membrane fuel cell may be summarized as follows. First of all, when fuel such as hydrogen gas is supplied to the oxidation electrode, the oxidation electrode generates hydrogen ions (H⁺) and electrons (e⁻) by oxidation reaction of hydrogen. The generated hydrogen ions are transferred to the reduction electrode through a polymer electrolyte membrane, and the generated electrons are transferred to the reduction electrode through an external circuit. The reduction electrode supplies oxygen, and oxygen is bonded to the hydrogen ions and electrons to produce water by a reduction reaction of oxygen.

Particularly, it has recently been required to miniaturize a fuel cell system to apply the fuel cell system to the fuel cell vehicle (FCV), and it has been required to develop a membrane-electrode assembly which is capable of exhibiting excellent output density per unit area to miniaturize the fuel cell system. Particularly, it has been essentially required to increase durability of a membrane-electrode assembly electrode layer to actually operate the fuel cell vehicle.

At present, a membrane-electrode assembly for the polymer electrolyte membrane fuel cell for being applied to a fuel cell vehicle field has technical limitations such as a drop in membrane-electrode assembly performance, remarkable reduction in durability and the like due to a long-time operation, and a drop in major durability of the membrane-electrode assembly may be generated as (1) deactivation of a catalyst layer or a catalyst due to potential cycling generated during load cycling, (2) corrosion of a carbon support due to high cathode potential during startup/shutdown, or the like.

Further, due to corrosion of the carbon support and aggregation-dissolution-ostwalt ripening between platinum catalytic particles generated during operation of the polymer electrolyte membrane fuel cell, electrochemical active surface area (ECSA) of the catalyst is rapidly decreased, and electrochemical activity of the catalyst is also decreased. Therefore, a problem that both performance and durability of an electrode catalyst used are remarkably dropped may be generated.

Accordingly, in order to solve such a problem, there is a need to develop a support catalyst having high electrochemical activity while maintaining excellent durability.

### [Related art document]

### [Patent document]

Korean Patent No. 1444635

### [Disclosure]

### [Technical Problem]

An objective of the present invention is to provide a highly crystalline graphitized carbon support having high electrochemical activity while maintaining excellent durability.

Other objective of the present invention is to provide an electrode for a fuel cell, the electrode including the support.

Another objective of the present invention is to provide a membrane-electrode assembly including the electrode.

Another objective of the present invention is to provide the fuel cell including the membrane-electrode assembly.

### [Technical Solution]

To achieve the one objective, an embodiment of the present invention may provide a highly crystalline graphitized carbon support including carbon particles including a highly crystalline graphitized layer, the highly crystalline graphitized layer comprising a functional group bonded to the surface thereof, the functional group comprising a compound represented by the following chemical formula 1:

[Chemical formula 1] -Ar-(R)ₙ

In chemical formula 1, Ar is alkylene or arylene, R are each independently a hydrogen atom or a substituent comprising any one hetero atom selected from the group consisting of nitrogen, sulfur and a mixture thereof, and n is an integer of 1 to 20.

The functional group may be covered on the surface of the highly crystalline graphite in a surface coverage of 0.5 × 10⁻¹⁰ to 1.0 × 10⁻⁸ mol/cm².

The functional group may have a doping level value of 0.7 to 15.0 at.% and an N/C or S/C ratio value of 0.005 to 0.500.

Chemical formula 1 may comprise an aromatic hydrocarbon represented by the following chemical formula 2:

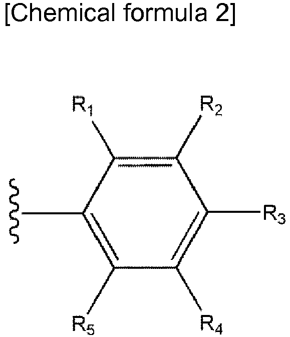

In chemical formula 2, R₁ to R₅ are each independently a hydrogen atom, or a substituent comprising any one hetero atom selected from the group consisting of nitrogen, sulfur and a mixture thereof.

At least one of R₁ to R₅ may include any one substituent selected from the group consisting of CN, SH, and NH₂.

A ratio value of a maximum peak area of D band at 1335 cm⁻¹ to 1365 cm⁻¹ to a maximum peak area of G band at 1570 cm⁻¹ to 1600 cm⁻¹ obtained by Raman spectroscopy using a laser with a wavelength of 514 nm of the highly crystalline graphitized carbon support may be 0.1 to 1.2.

A peak with respect to a (002) surface in an X-ray diffraction (XRD) spectrum of the highly crystalline graphitized carbon support may be exhibited at a bragg 2θ angle of 26°±0.5°, and the peak with respect to the (002) surface may have a full width at half maximum (FWHM) value of 0.1° to 0.8°.

Other embodiment of the present invention may provide a production method of a highly crystalline graphitized carbon support, the production method comprising the steps of: applying a stepwise heat treatment process to carbon particles to form a highly crystalline graphitized layer; and coupling reacting the highly crystalline graphitized layer with a functional group-substituted diazonium salt to introduce an organic functional group into the highly crystalline graphitized layer.

The stepwise heat treatment process may be a stepwise heat treatment process comprising: a first step of increasing temperature of the carbon particles to 900 to 1,000 °C in a temperature increasing speed of 3 to 10 °C/min, and maintaining the temperature-increased carbon particles for 5 to 30 minutes; a second step of increasing temperature of the carbon particles from 900 to 1,000 °C to 1,800 to 1,900 °C in a temperature increasing speed of 2 to 5 °C/min, and maintaining the temperature-increased carbon particles for 5 to 30 minutes; and a third step of increasing temperature of the carbon particles from 1,800 to 1,900 °C to 2,000 to 3,000 °C in a temperature increasing speed of 1 to 3 °C/min, and maintaining the temperature-increased carbon particles for 10 minutes to 2 hours.

The functional group-substituted diazonium salt may comprise a compound represented by the following chemical formula 3:

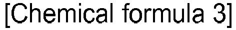

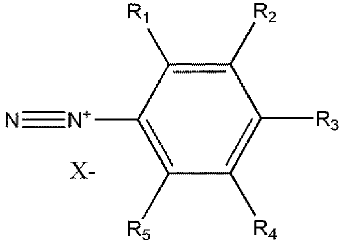

In chemical formula 3, R₁ to R₅ are each independently a hydrogen atom, or a substituent comprising any one hetero atom selected from the group consisting of nitrogen, sulfur and a mixture thereof, and X⁻ is a halogen group anion.

The functional group-substituted diazonium salt may be produced by performing diazonitization of an aromatic primary amine compound represented by the following chemical formula 4:

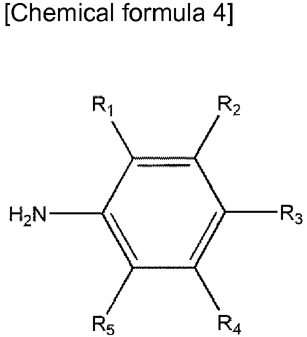

In chemical formula 4, R₁ to R₅ are each independently a hydrogen atom, or a substituent comprising any one hetero atom selected from the group consisting of nitrogen, sulfur and a mixture thereof.

The aromatic primary amine compound may be any one selected from the group consisting of 4-aminobenzonitrile, 4-aminobenzothiol, p-phenylenediamine, and mixtures thereof.

The step of introducing the organic functional group into the highly crystalline graphitized layer may be performed at 0 to 50 °C for 15 minutes to 24 hours.

Another embodiment of the present invention may provide an electrode for a fuel cell, the electrode including: the above-described highly crystalline graphitized carbon support; and a catalyst supported on the support.

Further, another embodiment of the present invention may provide a membrane-electrode assembly for the fuel cell, the membrane-electrode assembly including: a cathode; an anode; and a polymer electrolyte membrane, at least one of the cathode and anode including the electrode.

The cathode may include the electrode.

Another embodiment of the present invention may provide the fuel cell including the membrane-electrode assembly.

### [Advantageous Effects]

The electrode, membrane-electrode assembly and fuel cell may have excellent durability, and performance of the fuel cell may be improved when the electrode, membrane-electrode assembly and fuel cell including the highly crystalline graphitized carbon support according to an embodiment of the present invention are used.

### [Description of Drawings]

FIG. 1 is a mimetic diagram of a production method of a highly crystalline graphitized carbon support according to an embodiment of the present invention.
FIG. 2 is a mimetic diagram of a fuel cell according to another embodiment of the present invention.
FIG. 3 is a graph of comparing X-ray photoelectron spectroscopy (XPS) results of Example 8 and Comparative Example 1 in Experimental Example 1 of the present invention.
FIG. 4 is a graph of comparing electrochemical active surface area (ECSA) losses during 1000 cycles of Examples 3, 8 and 13 and Comparative Example 1 in Experimental Example 3 of the present invention.
FIG. 5 is a graph of comparing activities per unit mass of Examples 3, 8 and 13 and Comparative Example 1 in Experimental Example 4 of the present invention.
FIG. 6 is a graph of comparing voltage losses of Examples 3, 8 and 13 and Comparative Example 1 in Experimental Example 5 of the present invention.

### [Best Mode for Carrying Out the Invention]

Hereinafter, embodiments of the present invention will be described in detail. However, these embodiments are only exemplary, the present invention is not limited thereto, and the present invention will only be defined by the scope of the appended claims.

Unless particularly stated otherwise in the specification, it will be understood that, when a portion of a layer, film, region, plate or others is referred to as being 'on' other portion thereof, it can be 'directly on' the other portion thereof, or another portion may also be interposed therebetween.

The electrode for the fuel cell and the membrane-electrode assembly according to embodiments of the present invention may be applied to various electrolyte-type fuel cells including a phosphoric acid fuel cell (PAFC), a polymer electrolyte membrane fuel cell (PEMFC) such as a proton exchange membrane fuel cell (PEMFC), a direct methanol fuel cell (DMFC) or a PEMFC for high temperatures, and others.

An embodiment of the present invention may provide a highly crystalline graphitized carbon support including carbon particles including a highly crystalline graphitized layer, the highly crystalline graphitized layer comprising a functional group bonded to the surface thereof, the functional group comprising a compound represented by the following chemical formula 1:

[Chemical formula 1] -Ar-(R)ₙ

In chemical formula 1, Ar is alkylene or arylene, R are each independently a hydrogen atom or a substituent comprising any one hetero atom selected from the group consisting of nitrogen, sulfur and a mixture thereof, and n is an integer of 1 to 20.

In chemical formula 1, Ar may be alkylene having 1 to 20 carbon atoms, heteroalkylene having 1 to 20 carbon atoms, arylene having 3 to 30 carbon atoms or heteroarylene having 3 to 30 carbon atoms, preferably may be arylene or heteroarylene in which 1 to 3 rings having 3 to 10 carbon atoms are condensed, and more preferably may include a benzene ring.

R may include any one substituent selected from the group consisting of at least one hydrogen atom, CN, SH, and NH₂.

The highly crystalline graphitized layer may be formed to 0.1 to 100% by thickness, a ratio value of thickness of the highly crystalline graphitized layer to a total thickness of the highly crystalline graphitized carbon support. When the highly crystalline graphitized layer is formed to less than 0.1% by thickness, durability of the support and improvement effect of battery performance may be reduced. Compared to an amorphous carbon support, the carbon support can be entirely formed of highly crystalline graphite since the carbon support including the highly crystalline graphitized layer according to an embodiment of the present invention forms and develops a graphite layer such that the carbon support can form a highly crystalline graphitized carbon support while increasing thickness of the graphite layer and size of crystal domain.

The functional group represented by chemical formula 1 may comprise an aromatic hydrocarbon represented by the following chemical formula 2:

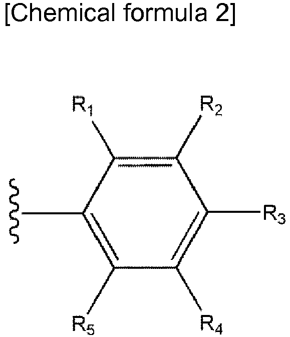

In chemical formula 2, R₁ to R₅ are each independently a hydrogen atom, or a substituent comprising any one hetero atom selected from the group consisting of nitrogen, sulfur and a mixture thereof.

At least one of R₁ to R₅ may include any one substituent selected from the group consisting of CN, SH, and NH₂.

The functional group may be covered on the surface of the highly crystalline graphite in a surface coverage of 0.5 × 10⁻¹⁰ to 1.0 × 10⁻⁸ mol/cm², preferably 1.0 × 10⁻¹⁰ to 9.0 × 10⁻¹⁰ mol/cm², more preferably 1.0 × 10⁻¹⁰ to 5.0 × 10⁻¹⁰ mol/cm², even more preferably 1.0 × 10⁻¹⁰ to 4.5 × 10⁻¹⁰ mol/cm², and still even more preferably 1.0 × 10⁻¹⁰ to 3.5 × 10⁻¹⁰ mol/cm². When the functional group is present on the surface of the highly crystalline graphite in a surface coverage of less than 0.5 × 10⁻¹⁰ mol/cm², a problem of reducing a functionalization effect due to surface modification may occur, and when the functional group is present on the surface of the highly crystalline graphite in a surface coverage of more than 1.0 × 10⁻⁸ mol/cm², a problem of lowering electrochemical performance may occur since the functional group is unevenly covered on the surface of the carbon support.

The functional group may have a doping level value of 0.7 to 15.0 at.% and an N/C or S/C ratio value of 0.005 to 0.500. When the functional group has a doping level value of less than 0.7 at.%, effects of increasing electrochemical performance of the support and improving durability of the catalyst due to substitution of the functional group may be reduced. Further, when the functional group has an N/C or S/C ratio value of less than 0.005, effects of preventing agglomeration of catalytic metal particles, preventing degradation of a catalyst layer, and improving durability of the catalyst due to surface functionalization of the carbon support may be reduced since a ratio of nitrogen or sulfur within the substituent is low.

A ratio (R_{D}/R_{G}) value of a maximum peak area of D band at 1335 cm⁻¹ to 1365 cm⁻¹ to a maximum peak area of G band at 1570 cm⁻¹ to 1600 cm⁻¹ obtained by Raman spectroscopy using a laser with a wavelength of 514 nm of the highly crystalline graphitized carbon support may be 0.1 to 1.2. Preferably, the ratio (R_{D}/R_{G}) value may be 0.3 to 1.0.

A peak with respect to a (002) surface in an X-ray diffraction (XRD) spectrum of the highly crystalline graphitized carbon support may be exhibited at a bragg 2θ angle of 26°±0.5°, and the peak with respect to the (002) surface may have a full width at half maximum (FWHM) value of 0.1° to 0.8°. More preferably, the peak with respect to the (002) surface may have a FWHM value of 0.2° to 0.6°.

Further, the highly crystalline graphitized carbon support has about 3.44 Å of a d-spacing value obtained from XRD measurement, and it could be confirmed that the d-spacing value of about 3.44 Å is similar to 3.35 Å which is a theoretical numerical value of graphite with an ideal structure.

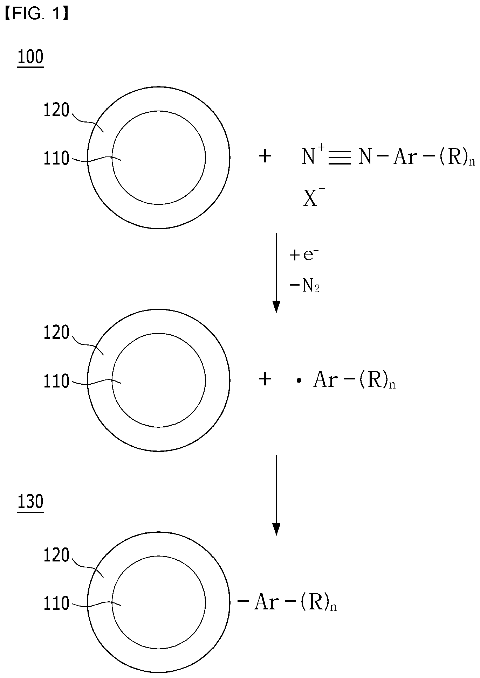

Other embodiment of the present invention provides a production method of the highly crystalline graphitized carbon support. FIG. 1 is a mimetic diagram illustrating a production method of the support according to other embodiment of the present invention. Hereinafter, a production method of a highly crystalline graphitized carbon support according to an exemplary embodiment of the present invention will be described through FIG. 1.

A production method of a highly crystalline graphitized carbon support 130 according to other embodiment of the present invention may be provided, wherein the production method comprises the steps of: applying a stepwise heat treatment process to carbon particles 110, thereby forming a highly crystalline graphitized layer 120 to produce carbon particles 100 including the highly crystalline graphitized layer; and coupling reacting the highly crystalline graphitized layer 120 with a functional group-substituted diazonium salt to introduce a functional group into the highly crystalline graphitized layer.

The stepwise heat treatment process may be a stepwise heat treatment process comprising: a first step of increasing temperature of the carbon particles to 900 to 1,000 °C in a temperature increasing speed of 3 to 10 °C/min, and maintaining the temperature-increased carbon particles for 5 to 30 minutes; a second step of increasing temperature of the carbon particles from 900 to 1,000 °C to 1,800 to 1,900 °C in a temperature increasing speed of 2 to 5 °C/min, and maintaining the temperature-increased carbon particles for 5 to 30 minutes; and a third step of increasing temperature of the carbon particles from 1,800 to 1,900 °C to 2,000 to 3,000 °C in a temperature increasing speed of 1 to 3 °C/min, and maintaining the temperature-increased carbon particles for 10 minutes to 2 hours.

More preferably, the stepwise heat treatment process may be a stepwise heat treatment process comprising: a step 1-1 of increasing temperature of the carbon particles to 900 to 1,000 °C in a temperature increasing speed of 3 to 5 °C/min; a step 1-2 of maintaining the temperature-increased carbon particles at 900 to 1,000 °C for 5 to 20 minutes; a step 2-1 of increasing temperature of the carbon particles from 900 to 1,000 °C to 1,800 to 1,900 °C in a temperature increasing speed of 2 to 4 °C/min; a step 2-2 of maintaining the temperature-increased carbon particles at 1,800 to 1,900 °C for 10 to 20 minutes; a step 3-1 of increasing temperature of the carbon particles from 1,800 to 1,900 °C to 2,000 to 3,000 °C in a temperature increasing speed of 1 to 2 °C/min; and a step 3-2 of maintaining the temperature-increased carbon particles at 2,000 to 3,000 °C for 15 to 25 minutes.

A diazonium salt substituted with a functional group represented by X⁻ +N≡N-Ar-(R)ₙ in FIG. 1 may comprise a compound represented by the following chemical formula 3:

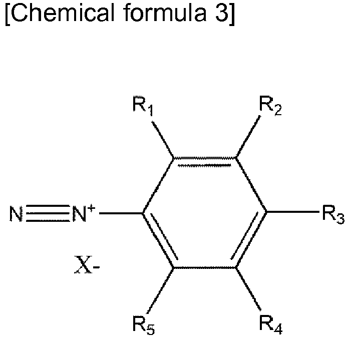

In chemical formula 3, R₁ to R₅ are each independently a hydrogen atom, or a substituent comprising any one hetero atom selected from the group consisting of nitrogen, sulfur and a mixture thereof, and X⁻ is a halogen group anion, preferably any one selected from the group consisting of F⁻, Cl⁻, Br⁻ and I⁻.

A diazonium salt substituted with a functional group represented by X⁻ +N≡N-Ar-(R)ₙ in FIG. 1 may be produced by performing diazonitization of an aromatic primary amine compound represented by the following chemical formula 4:

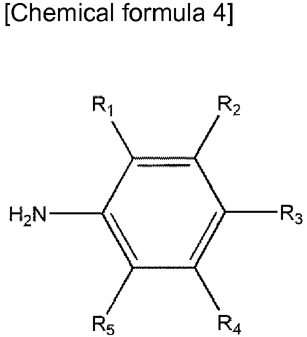

In chemical formula 4, R₁ to R₅ are each independently a hydrogen atom, or a substituent comprising any one hetero atom selected from the group consisting of nitrogen, sulfur and a mixture thereof.

The aromatic primary amine compound may be any one selected from the group consisting of 4-aminobenzonitrile, 4-aminobenzothiol, p-phenylenediamine, and mixtures thereof.

The step of introducing the functional group into the highly crystalline graphitized layer may be performed at 0 to 50 °C for 15 minutes to 24 hours.

More specifically, the step of introducing the functional group into the highly crystalline graphitized layer may be subdivided into a step of producing a diazonium salt including the functional group and a step of reacting the diazonium salt including the functional group with the highly crystalline graphitized layer to bond the functional group to the highly crystalline graphitized layer. The step of producing the diazonium salt including the functional group and the step of bonding the functional group to the highly crystalline graphitized layer may be sequentially or simultaneously performed.

More preferably, the step of producing the diazonium salt including the functional group and/or the step of bonding the functional group to the highly crystalline graphitized layer may comprise the steps of: dispersing carbon particles 100 including the highly crystalline graphitized layer 120 in a solvent to obtain a solution having the carbon particles 100 including the highly crystalline graphitized layer 120 dispersed therein; adding a solution comprising the aromatic primary amine compound to the solution having the carbon particles 100 including the highly crystalline graphitized layer 120 dispersed therein, and stirring the solution comprising the aromatic primary amine compound and the solution having the carbon particles 100 including the highly crystalline graphitized layer 120 dispersed therein to form a mixture; adding sodium nitrite and a strong acid to the mixture; performing a diazonium coupling reaction of the mixture having sodium nitrite and the strong acid added thereto at 0 to 50 °C for 15 minutes to 12 hours to obtain a reaction product; and vacuum-filtering, washing and vacuum-drying the reaction product to produce a highly crystalline graphitized carbon support 130.

The aromatic primary amine compound may be added as an aqueous solution with a concentration range of 0.1 to 100 mM. When the aromatic primary amine compound is added in the concentration range, durability and performance of the carbon support can be improved by enabling the diazonium coupling reaction to facilitate bonding of the functional group to the surface of the highly crystalline graphitized carbon support. When the aromatic primary amine compound is present at a concentration of 0.1 mM or less, a problem of reducing durability and activity improving effects according to supporting of the functional group may be generated due to insufficient surface modification and surface coverage. When the aromatic primary amine compound is present at a concentration of more than 100 mM, a side reaction or the like in addition to a bonding reaction between the highly crystalline graphitized carbon support and the functional group is generated such that nonuniform surface modification or surface covering may cause a problem of lowering electrochemical performance.

A solvent for dissolving the carbon particles 100 including the highly crystalline graphitized layer 120 and/or the aromatic primary amine compound may include a hydrophilic solvent. More preferably, the solvent may include any one selected from the group consisting of water, a C₁-C₅ alcohol, a C₁-C₅ ketone, a C₁-C₅ aldehyde, a C₁-C₅ carbonate, a C₁-C₅ carboxylate, a C₁-C₅ carboxylic acid, a C₁-C₅ ether, a C₁-C₅ amide, and mixtures thereof. More preferably, the solvent may include purified water.

The strong acid may include any one selected from the group consisting of hydrochloric acid, sulfuric acid and a mixture thereof, and more preferably a strong acid with an acidity of 1.5 to 4.

The diazonium coupling reaction may be performed at 0 to 50 °C for 15 minutes to 24 hours, more preferably at room temperature for 30 minutes to 6 hours. A problem that a highly crystalline graphite and the functional group are not strongly bonded may be generated since reaction conditions are not sufficient when the coupling reaction is performed at a condition of less than 0 °C or less than 15 minutes, and a problem that it is difficult to perform a uniform surface modification process may be generated since the side reaction or the like in addition to a bonding reaction between the highly crystalline graphite and the functional group is generated when the coupling reaction is performed at a condition of more than 50 °C or more than 24 hours.

A cleaning solution used in the washing step may include a hydrophilic solvent. More preferably, the cleaning solution may include any one selected from the group consisting of water, a C₁-C₅ alcohol, a C₁-C₅ ketone, a C₁-C₅ aldehyde, a C₁-C₅ carbonate, a C₁-C₅ carboxylate, a C₁-C₅ carboxylic acid, a C₁-C₅ ether, a C₁-C₅ amide, and mixtures thereof. Even more preferably, the cleaning solution may include methanol, acetone, purified water, and mixed solutions thereof.

An electrode for a fuel cell according to another embodiment of the present invention may be provided, wherein the electrode for the fuel cell includes: the highly crystalline graphitized carbon support; and a catalyst which is supported on the support.

The catalyst may include any catalysts which can be used as the catalyst by participating in a reaction of the fuel cell, specifically a metal catalyst, and more specifically a platinum-based catalyst.

The platinum-based catalyst may include any one catalyst selected from the group consisting of platinum (Pt), palladium (Pd), ruthenium (Ru), iridium (Ir), osmium (Os), a platinum-M alloy (M is any one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), solver (Ag), gold (Au), zinc (Zn), tin (Sn), molybdenum (Mo), tungsten (W), lanthanum (La), rhodium (Rh), and alloys obtained by bonding one or more thereof), and combinations such as mixtures thereof.

The electrode for the fuel cell may be referred to as a cathode and/or an anode, and it is all right to use materials which are the same as each other or materials which are different from each other as the cathode and anode. More specific examples of the electrode for the fuel cell may include an electrode including material including any one platinum-based catalyst selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, and Pt/Ru/Sn/W.

Further, the catalyst may be used in a state that the catalyst has an increased content similarly to the case of using the catalyst as the catalyst itself according to a content ratio of the catalyst to the highly crystalline graphitized carbon support.

The highly crystalline graphitized carbon support may additionally include an auxiliary support, and the auxiliary support may be any one selected from the group consisting of carbon-based catalyst supports such as graphite, super P, carbon fiber, carbon sheet, carbon black, Ketjen Black, acetylene black, carbon nanotube (CNT), carbon sphere, carbon ribbon, fullerene, activated carbon, carbon nanowire, carbon nanohorn, carbon aerogel, carbon nanoring, carbon nanocage, mesoporous carbon, ordered (nano)mesoporous carbon and the like, porous inorganic oxides such as zirconia, alumina, titania, silica, ceria and the like, zeolite, and combinations of one or more thereof.

At this time, the catalyst may be positioned on the surface of the support, or may be penetrated into the support while filling internal pores of the support. The process will be readily understood by those skilled in the art although a detailed description on the process is omitted in the present specification since a process of supporting a precious metal on the support is widely known in the art.

Metal particles of the catalyst may include 10 to 70 wt% of catalytic metal particles having a size of 1 to 20 nm with respect to the total weight of the catalyst, and may include 90 to 30 wt% of the highly crystalline graphitized carbon support with respect to the total weight of the catalyst. There may be a problem that electrode activity is lowered when the catalytic metal particles are contained in an amount of less than 10 wt% with respect to the total weight of the catalyst, and the catalyst activity may be inversely lowered as active area is reduced by agglomeration of the catalytic metal particles when the catalytic metal particles are contained in an amount of more than 70 wt% with respect to the total weight of the catalyst.

The electrode for the fuel cell can be produced by composing an electrode forming composition additionally including a solvent, an ionomer and the like in addition to an active material comprised of the highly crystalline graphitized carbon support and the catalyst.

The solvent may be selected from the group consisting of hydrophilic solvents, an organic solvent, and mixtures of one or more thereof.

The hydrophilic solvents may be hydrophilic solvents having one or more functional groups selected from the group consisting of alcohol, ketone, aldehyde, carbonate, carboxylate, carboxylic acid, ether and amide including C₁-C₁₂ linear and branched saturated or unsaturated hydrocarbons as a main chain, and the hydrophilic solvents may include an alicyclic or aromatic cyclo compound as at least a portion of the main chain. Specific examples of the hydrophilic solvents may include: alcohol such as methanol, ethanol, isopropyl alcohol, ethoxy ethanol, n-propyl alcohol, butyl alcohol, 1,2-propanediol, 1-pentanol, 1-pentanediol, 1,9-nonanediol, or the like; ketone such as heptanone, octanone, or the like; aldehyde such as benzaldehyde, tolualdehyde, or the like; ester such as methyl pentanoate, ethyl-2-hydroxypropanoate, or the like; carboxylic acid such as pentanoic acid, heptanoic acid, or the like; ether such as methoxybenzene, dimethoxypropane, or the like; and amide such as propanamide, butylamide, dimethylacetamide, or the like.

The organic solvent may be any one selected from the group consisting of ethoxy ethanol, N-methyl pyrrolidone, ethylene glycol, propylene glycol, butylene glycol, diethylene glycol, dipropylene glycol, polyethylene glycol, 2-methylene-1,3-propanediol, 1,4-butanediol, 1,5-pantanediol, 3-methylene-1,5-pentanediol, 1,6-hexanediol, dimethylsulfoxide, tetrahydrofuran, and mixtures thereof.

The solvent can be adjusted according to a requireed viscosity of the electrode forming composition. More preferably, the solvent may be contained in an amount of 20 to 95 wt% with respect to the total weight of the electrode forming composition. There may be a dispersion problem due to cracking and high viscosity during coating of the electrode as the solvent has a too high solid content when less than 20 wt% of the solvent is contained, and the solvent may be unfavorable to electrode activity when more than 95 wt% of the solvent is contained.

The ionomer may include a hydrogen ion conductive polymer, and preferably any polymer resins having a cation exchange group or an anion exchange group at a side chain thereof.

The cation exchange group may be any one selected from the group consisting of a sulfonic acid group, a carboxylic acid group, a boronic acid group, a phosphoric acid group, an imide group, a sulfonimide group, a sulfonamide group, a phosphonic acid group and derivatives thereof, and may generally be the sulfonic acid group or the carboxylic acid group.

Specifically, the polymer resins having the cation exchange group may include one or more hydrogen ion conductive polymers selected from a fluoro-based polymer, a benzimidazole-based polymer, a polyimide-based polymer, a polyetherimide-based polymer, a polyphenylene sulfide-based polymer, a polysulfone-based polymer, a polyethersulfone-based polymer, a polyetherketone-based polymer, a polyether-ether ketone based polymer, and a polyphenylquinoxaline-based polymer, and more specifically, one or more hydrogen ion conductive polymers selected from poly(perfluorosulfonic acid), poly(perfluorocarboxylic acid), a copolymer of fluorovinyl ether and tetrafluoroethylene containing a sulfonic acid group, polyetherketone sulfide, arylketone, poly(2,2'-m-phenylene)-5,5'-bibenzimidazole, and poly(2,5-benzimidazole).

The anion exchange group is a polymer which can transfer an anion such as a hydroxy ion, carbonate or bicarbonate, an anionic precursor is commercially available in the form of hydroxide or halide (generally chloride), and the anionic precursor can be used in industrial water purification, a metal separation or catalytic process, and the like.

The polymer resins having the anion exchange group may generally include a polymer conductor doped with a metal hydroxide. Specifically, the polymer resins having the anion exchange group may include poly(ethersulfone), polystyrene, a vinyl-based polymer, poly(vinyl chloride), poly(vinylidene fluoride), poly(tetrafluoroethylene), poly(benzimidazole), poly(ethylene glycol) or the like doped with the metal hydroxide.

Further, the polymer resins having the anion exchange group may additionally include Nafion, aquivion or the like which is a commercially available example of the ionomer.

The ionomer may substitute H with Na, K, Li, Cs or tetrabutylammonium in the cation exchange group or the anion exchange group at the end of a side chain thereof. H is substituted with Na using NaOH during preparation of a catalyst composition when H is substituted with Na in the ion exchange group at the end of the side chain of the ionomer, H is substituted with tetrabutylammonium using tetrabutylammonium hydroxide during preparation of the catalyst composition when H is substituted with tetrabutylammonium, and K, Li or Cs may also be substituted using an appropriate compound. Since such a substitution is well-known to this art, a detailed description thereof in the present specification is omitted.

Further, the ionomer may be used in the form of a single material or a mixture, and the ionomer may selectively be used along with a non-conductive compound for the purpose of further improving adhesive strength of the ionomer with a polymer electrolyte membrane. It is preferable to use the ionomer in an adjusted amount of the ionomer obtained by adjusting the amount of the ionomer such that an amount of the ionomer is suitable for the purpose of use.

The non-conductive compound may include one or more selected from the group consisting of polytetrafluoroethylene (PTFE), tetrafluoroethylene-hexafluoropropylene copolymer (FEP), tetrafluoroethylene-perfluoroalkylvinylether copolymer (PFA), ethylene/tetrafluoroethylene (ETFE), ethylenechlorotrifluoroethylene copolymer (ECTFE), polyvinylidene fluoride, polyvinylidene fluoride-hexafluoropropylene copolymer (PVdF-HFP), dodecylbenzene sulfonic acid and sorbitol. More preferably, the non-conductive compound may include Nafion and the like.

The ionomer may be contained in an amount of 20 to 50 wt% with respect to the total weight of an electrode solid content. There may be a problem that produced ions are not well transferred when the ionomer is contained in an amount of less than 20 wt%, and it is difficult to supply hydrogen or oxygen (air), and active area capable of performing a reaction process may be reduced since pores are insufficient when the ionomer is contained in an amount of more than 50 wt%.

Further, the catalyst may be contained in an amount of 5 to 50 wt% with respect to the total weight of the electrode forming composition. Electrode performance may be lowered by a lack of the catalyst when the catalyst is contained in an amount of less than 5 wt%, and the catalyst may be unfavorable to production of the electrode as viscosity is increased, or the catalyst may be unfavorable to ion conduction as the ionomer is insufficient when the catalyst is contained in an amount of more than 50 wt%.

Further, the electrode for the fuel cell of the present invention may be produced by performing a drying process after performing a coating process of coating a composition for forming the electrode for the fuel cell to a thickness of 1 to 100 *µ*m on a decal film. Performance may be lowered since catalytic active site is insufficient when the composition for forming the electrode for the fuel cell is coated to a thickness of less than 1 *µ*m, and resistance may be increased since moving distances of ions and electrons are increased when the composition for forming the electrode for the fuel cell is coated to a thickness of more than 100 *µ*m.

Further, the electrode for the fuel cell may optionally additionally include an electrode substrate. The electrode substrate serves to support the electrode, and serves to diffuse fuel and an oxidizer using the catalyst such that the fuel or oxidizer can be easily approached.

The electrode substrate may include carbon paper, carbon cloth, carbon felt, carbon fiber, or combinations thereof, and may preferably include the carbon fiber among them.

The electrode substrate may include pores, and performance of the fuel cell may be improved by adjusting size and porosity of the pores. Specifically, the electrode substrate may include a mean pore having a diameter of 20 to 40 *µ*m at a porosity of 30 to 80 volume % with respect to the total volume of the electrode substrate. Specifically, the electrode substrate may include a mean pore having a diameter of 20 to 30 *µ*m at a porosity of 50 to 80 volume % with respect to the total volume of the electrode substrate.

Further, the electrode for the fuel cell may optionally additionally include a microporous layer for improving a reactant diffusion effect. The microporous layer may have a thickness range of 3 to 80 *µ*m, and may specifically have a thickness range of 10 to 70 *µ*m. When thickness of the microporous layer is within the thickness range, resistance increase due to mass transfer limitation caused by water flooding at a humidification condition of 80% relative humidity may be prevented, and, when producing a fuel cell stack, crack or deintercalation generated by pressing due to channels of the separators caused by clamping pressure may be prevented.

The microporous layer generally includes conductive powder with a small particle diameter. For example, the microporous layer may include carbon powder, carbon black, acetylene black, activated carbon, carbon fiber, fullerene, carbon nanotube, carbon nanowire, carbon nanohorn, carbon nanoring, or combinations thereof.

The microporous layer may be produced by coating a composition comprising the conductive powder, a binder resin and a solvent on the electrode substrate.

The binder resin may include polytetrafluoroethylene, polyvinylidene fluoride, polyhexafluoropropylene, polyperfluoroalkylvinylether, polyperfluorosulfonylfluoride, alkoxy vinyl ether, polyvinyl alcohol, cellulose acetate, copolymers thereof, or the like.

The solvent may include an alcohol such as ethanol, isopropyl alcohol, n-propyl alcohol, butyl alcohol or the like, water, dimethylacetamide, dimethylsulfoxide, N-methylpyrrolidone, tetrahydrofuran, and the like.

The coating process may include a screen printing method, a spray coating method, a coating method using a doctor blade, and the like. However, the coating process is not limited thereto.

The drying process may be a process of performing a drying operation at a drying temperature of 25 to 90 °C for a drying time of 12 hours or more. The solvent may disturb transferring since an excessive amount of the solvent is remained when the drying temperature is less than 25 °C, and the drying time is less than 12 hours. A cracking phenomenon may occur on the surface of the electrode since the drying process is promptly performed when the drying process is performed at a drying temperature of more than 90 °C.

A membrane-electrode assembly for a fuel cell according to another embodiment of the present invention may be provided, wherein the membrane-electrode assembly for the fuel cell includes: a cathode; an anode; and a polymer electrolyte membrane, at least one of the cathode and anode including an electrode according to another exemplary embodiment of the present invention. Further more preferably, the cathode may include the electrode according to another exemplary embodiment of the present invention.

The polymer electrolyte membrane, as a solid polymer electrolyte including an ion conductor, may be formed in the form of a single film in which the ion conductor is formed in a sheet or a film, or in the form of a reinforced membrane in which the ion conductor is filled in a porous support.

The ion conductor may include any one of a polymer resin having a cation exchange group in a side chain thereof or a polymer resin having an anion exchange group in a side chain thereof.

The cation exchange group may be any one selected from the group consisting of a sulfonic acid group, a carboxylic acid group, a boronic acid group, a phosphoric acid group, an imide group, a sulfonimide group, a sulfonamide group, a phosphonic acid group and derivatives thereof, and may generally be the sulfonic acid group or the carboxylic acid group.

Specifically, the polymer resin having the cation exchange group may include one or more hydrogen ion conductive polymers selected from a fluoro-based polymer, a benzimidazole-based polymer, a polyimide-based polymer, a polyetherimide-based polymer, a polyphenylene sulfide-based polymer, a polysulfone-based polymer, a polyethersulfone-based polymer, a polyetherketone-based polymer, a polyether-ether ketone based polymer, and a polyphenylquinoxaline-based polymer, and more specifically, one or more hydrogen ion conductive polymers selected from poly(perfluorosulfonic acid), poly(perfluorocarboxylic acid), a copolymer of fluorovinyl ether and tetrafluoroethylene containing a sulfonic acid group, polyetherketone sulfide, arylketone, poly(2,2'-m-phenylene)-5,5'-bibenzimidazole, and poly(2,5-benzimidazole).

The polymer resin having hydrogen ion conductivity may substitute H with Na, K, Li, Cs or tetrabutylammonium in the cation exchange group at the end of a side chain thereof. H is substituted with Na using NaOH during preparation of a catalyst composition when H is substituted with Na in the ion exchange group at the end of the side chain of the polymer resin having hydrogen ion conductivity, H is substituted with tetrabutylammonium using tetrabutylammonium hydroxide during preparation of the catalyst composition when H is substituted with tetrabutylammonium, and K, Li or Cs may also be substituted using an appropriate compound. Since such a substitution is well-known to this art, a detailed description thereof in the present specification is omitted.

The anion exchange group is a polymer which can transfer an anion such as a hydroxy ion, carbonate or bicarbonate, an anionic precursor is commercially available in the form of hydroxide or halide (generally chloride), and the anionic precursor can be used in industrial water purification, a metal separation or catalytic process, and the like.

The polymer resins having the anion exchange group may generally include a polymer doped with a metal hydroxide. Specifically, the polymer resins having the anion exchange group may include poly(ethersulfone), polystyrene, a vinyl-based polymer, poly(vinyl chloride), poly(vinylidene fluoride), poly(tetrafluoroethylene), poly(benzimidazole), poly(ethylene glycol) or the like doped with the metal hydroxide.

Further, the polymer electrolyte membrane may include hydrocarbon-based polymer electrolyte membranes, fluorine-based polymer electrolyte membranes, and one or more mixtures or copolymers thereof.

The hydrocarbon-based polymer electrolyte membranes may include hydrocarbon-based polymers, the polymers may be selected from homopolymers or copolymers of styrene, imide, sulfone, phosphazene, ether ether ketone, ethylene oxide, polyphenylene sulfide or an aromatic group, and derivatives thereof, and these polymers may be used alone or in combination. Production of electrolyte membranes using the hydrocarbon-based polymers has inexpensive production costs, facilitates the production process, and exhibits high ion conductivity compared to production of the electrolyte membranes using the fluorine-based polymers.

More preferably, the appropriate hydrocarbon membranes may include one or more selected from the group consisting of membranes into which sulfonated polysulfone, sulfonated polyethersulfone, sulfonated polyetherketone, sulfonated polyetheretherketone, sulfonated polyaryleneetheretherketone, polysulfonated polyaryleneethersulfone, sulfonated polyaryleneetherbenzimidazole, and an ion conductor are introduced.

When the fluorine-based polymer electrolyte membranes are materials having degrees of mechanical strength and high electrochemical stability which are capable of forming a film with an ion conductive membrane, the fluorine-based polymer electrolyte membranes can be used without specific limitation. Specific examples of the fluorine-based polymer electrolyte membranes may include a perfluoro sulfonic acid resin, a copolymer of tetrafluoroethylene and fluorovinyl ether, and the like. A fluorovinyl ether moiety has a function of conducting hydrogen ions. The copolymer is commercially available since the copolymer is has been sold under the brand name Nafion.

A production method of a membrane-electrode assembly for a fuel cell according to an embodiment of the present invention may comprise the steps of: coating and drying an electrode (or an electrode forming composition) on a release film; contacting a base material including the electrode with both surfaces of a polymer electrolyte membrane, and then transferring the base material to the surfaces of the polymer electrolyte membrane by a transfer device to obtain a transferred membrane-electrode assembly; and removing the release film from the transferred membrane-electrode assembly.

The electrode forming composition may comprise a support and a catalyst for the fuel cell according to an embodiment of the present invention, and the electrode forming composition is not limited a mixture including the support and catalyst, but may comprise any material for forming an electrode layer or a catalyst layer in the fuel cell. The electrode forming composition may further comprise a solvent, a hydrogen ion conductive polymer, an ionomer, a carbon-based material, and the like.

When coating the electrode forming composition on the release film, it is preferable to uniformly apply the electrode forming composition to a dry thickness of 10 to 200 *µ*m onto the release film after continuously or intermittently transferring the electrode forming composition to a coater. More specifically, after continuously transferring a dispersed electrode forming composition to the coater such as a die coater, a bar coater, a comma coater or the like, the dispersed electrode forming composition is uniformly applied to an electrode layer dry thickness of 10 to 200 *µ*m, more preferably 10 to 100 *µ*m, on the release film, and the solvent is volatilized from the electrode forming composition by passing the electrode forming composition applied onto the release film through a drying furnace maintained to a predetermined temperature. A method of applying the electrode forming composition onto the release film and drying the electrode forming composition applied onto the release film is not limited to the above-described method.

The step of drying the electrode forming composition may be a step of performing a drying process at a drying temperature of 25 to 90 °C for a drying time of 12 hours or more. The solvent may disturb transferring since an excessive amount of the solvent is remained when the drying temperature is less than 25 °C, and the drying time is less than 12 hours. A cracking phenomenon may occur on the surface of the electrode since the drying process is promptly performed when the drying process is performed at a drying temperature of more than 90 °C.

After the step of drying the electrode forming composition to produce the electrode, it is possible to perform a step of cutting a dried electrode layer and the release film to a required size and transferring the cut dried electrode layer to the cut release film through thermocompression bonding.

A step of bonding the electrode-coated release film and the polymer electrolyte membrane to transfer the electrode layer on the release film to the polymer electrolyte membrane using the transfer device may be performed at conditions of 80 to 200 °C and 5 to 200 kgf/cm². Transferring of the electrode layer onto the release film may not be properly performed when the transferring step is proceeded at conditions of 80 °C and less than 5 kgf/cm², it is apprehended that degeneration of the ionomer within the electrolyte membrane may occur at a temperature condition of more than 200 °C, and pressure may cause a drop in performance due to collapse of a pore structure within the electrode layer at a pressure condition of more than 200 kgf/cm².

A membrane-electrode assembly may be manufactured by further comprising a step of removing the release film after performing the transferring step.

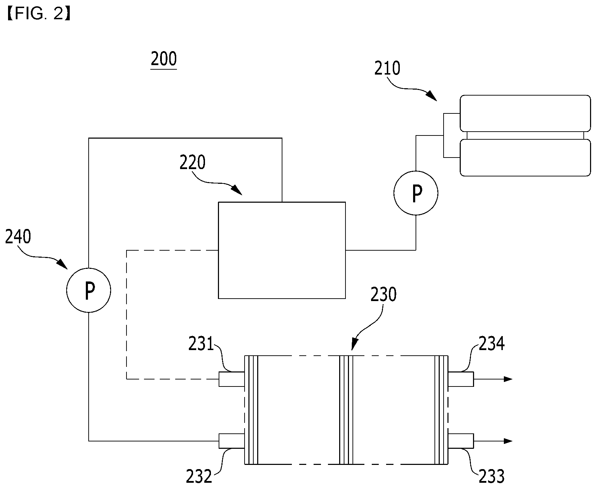

Another embodiment of the present invention provides a fuel cell including the membrane-electrode assembly. FIG. 2 is a schematic diagram illustrating an overall configuration of a fuel cell according to another embodiment of the present invention.

Referring to FIG. 2, the fuel cell 200 includes a fuel supply unit 210 which supplies a mixed fuel having fuel and water mixed therein, a reforming unit 220 which reforms the mixed fuel to generate a reformed gas including hydrogen gas, a stack 230 in which the reformed gas including hydrogen gas supplied from the reforming unit 220 causes an electrochemical reaction with an oxidizer to generate electric energy, and an oxidizer supply unit 240 which supplies the oxidizer to the reforming unit 220 and the stack 230.

The stack 230 includes a plurality of unit cells which generates electric energy by inducing an oxidation/reduction reaction of the reformed gas including hydrogen gas supplied from the reforming unit 220 and the oxidizer supplied from the oxidizer supply unit 240.

The unit cells each mean a cell of a unit which generates electricity, and include the membrane-electrode assembly which oxidizes or reduces the reformed gas including hydrogen gas and oxygen in the oxidizer, and separators (or may be called bipolar plates, and hereinafter, referred to as "separators") for supplying the oxidizer and the reformed gas including hydrogen gas to the membrane-electrode assembly. The separators are disposed at both sides of the membrane-electrode assembly such that the membrane-electrode assembly is formed between the separators. At this time, the separators which are each located at outermost sides of the stack may be referred to as end plates.

One end plate among the separators includes a pipe-shaped first supply pipe 231 for injecting the reformed gas including hydrogen gas supplied from the reforming unit 220 and a pipe-shaped second supply pipe 232 for injecting oxygen gas, and the other end plate among the separators includes a first discharge pipe 233 for discharging the reformed gas including hydrogen gas that has not finally been reacted and remained in a plurality of unit cells to the outside, and a second discharge pipe 234 for discharging the oxidizer that has not been finally reacted and remained in the unit cells to the outside.

### [Mode(s) for Carrying Out the Invention]

Hereinafter, the embodiments are illustrated in more detail with reference to examples. Preferred embodiments of the present invention will be described below in more detail. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

### [Production Example 1: Producing supports for fuel cells and catalysts for fuel cells]

### (Example 1)

Carbon particles having a highly crystalline graphitized layer were produced by performing: a step 1-1 of increasing temperature of the carbon particles (Product name: ECP 300J, Producer: Lion Corporation) to 1,000 °C in a temperature increasing speed of 5 °C/min; a step 1-2 of maintaining the temperature-increased carbon particles at 1,000 °C for 10 minutes; a step 2-1 of increasing temperature of the carbon particles from 1,000 to 1,900 °C in a temperature increasing speed of 3 °C/min; a step 2-2 of maintaining the temperature-increased carbon particles at 1,900 °C for 5 minutes; a step 3-1 of increasing temperature of the carbon particles from 1,900 to 2,250 °C in a temperature increasing speed of 2 °C/min; and a step 3-2 of maintaining the temperature-increased carbon particles at 2,250 °C for 60 minutes.

A stirred mixture was obtained by dispersing 2.5 g of the carbon particles in 250 ml of purified water (deionized water)/ethanol (95/5, v/v) to obtain a highly crystalline carbon support-dispersed solution, adding 2 mM of 4-aminobenzonitrile to the highly crystalline carbon support-dispersed solution to obtain a mixture, and stirring the mixture for one hour. After adding 4 mM of sodium nitrite (NaNO₂) to the obtained stirred mixture and stirring the sodium nitrite-added mixture for 30 minutes to obtain a stirred mixture, 5 mL of a 0.5 M aqueous hydrochloric acid solution (HCI) was added to the stirred mixture to obtain a mixture. A diazonium coupling reaction was performed to obtain a reaction product by stirring the obtained mixture at room temperature for 4 hours.

A carbon support was produced by vacuum-filtering the reaction product to obtain a vacuum-filtered reaction product, sequentially washing the vacuum-filtered reaction product with distilled water, methanol and acetone to obtain a washed reaction product, and vacuum-drying the washed reaction product for 24 hours. A catalyst for a fuel cell was produced by supporting Pt on the produced carbon support by a chemical reduction method using an aqueous solution of water/ethylene glycol (a molar ratio of 1:0.25).

### (Examples 2 to 5)

Supports for fuel cells were produced in Examples 2 to 5 by the same method as in Example 1 except that 4, 8, 16 and 32 mM of 4-aminobenzonitrile instead of 2 mM of 4-aminobenzonitrile of Example 1 were added in Examples 2 to 5, and 8, 16, 32 and 64 mM of sodium nitrite instead of 4 mM of sodium nitrite of Example 1 were added in Examples 2 to 5.

### (Examples 6 to 10)

Supports for fuel cells were produced in Examples 6 to 10 by the same method as in Example 1 except that 2, 4, 8, 16 and 32 mM of 4-aminobenzonitrile instead of 2 mM of 4-aminobenzonitrile of Example 1 were added in Examples 6 to 10.

### (Examples 11 to 15)

Supports for fuel cells were produced in Examples 11 to 15 by the same method as in Example 1 except that 2, 4, 8, 16 and 32 mM of p-phenylenediamine instead of 2 mM of 4-aminobenzonitrile of Example 1 were added in Examples 11 to 15.

### (Comparative Example 1)

A support for a fuel cell was produced by performing a graphitization process of the carbon particles (Product name: ECP 300J, Producer: Lion Corporation) under nitrogen/argon (N₂/Ar) atmosphere at 2,250 °C for 60 minutes to produce a carbon support. A catalyst for a fuel cell was produced by supporting Pt on the produced carbon support through the same method as in Example 1.

### [Production Example 2: Producing electrodes for fuel cells and membrane-electrode assemblies for fuel cells]

### (Example 16)

A cathode electrode composition was prepared by dispersing 12 wt% of a Nafion®/H₂O/2-propanol solution as a binder and 88 wt% of a cathode catalyst in which Pt was supported on a support for a highly crystalline graphite fuel cell containing a functional group of Example 1 through stirring and ultrasonic methods. A cathode electrode was produced by doctor blade-coating the prepared cathode electrode composition on a Teflon release film and drying the cathode electrode composition doctor blade-coated on the Teflon release film at 60 °C for 6 hours. At this time, the cathode electrode had a catalyst loading amount of about 0.25 mg/cm².

An anode electrode composition was prepared by dispersing 12 wt% of the Nafion®/H₂O/2-propanol solution as the binder and 88 wt% of a Pt/C anode catalyst through stirring and ultrasonic methods. An anode electrode was produced by doctor blade-coating the prepared anode electrode composition on the Teflon release film and drying the anode electrode composition doctor blade-coated on the Teflon release film at 60 °C for 6 hours. At this time, the anode electrode had a catalyst loading amount of about 0.10 mg/cm².

A membrane-electrode assembly having the cathode electrode and anode electrode coupled to the polymer electrolyte membrane was produced after interposing a fluorine-based polymer electrolyte membrane of perfluorosulfonic acid (PFSA) with a thickness of 15 *µ*m between the produced cathode and anode electrodes, and pressing the polymer electrolyte membrane interposed between the cathode and anode electrodes at heat and pressure conditions of 160 °C and 20 kgf/cm² for 3 minutes.

### (Examples 17 to 20)

Membrane-electrode assemblies for fuel cells were produced by the same method as in Example 16 except that the supports for the fuel cells of Examples 2 to 5 instead of the support for the fuel cell of Example 1 were added in Example 16.

### (Examples 21 to 25)

Membrane-electrode assemblies for fuel cells were produced by the same method as in Example 16 except that the supports for the fuel cells of Examples 6 to 10 instead of the support for the fuel cell of Example 1 were added in Example 16.

### (Examples 26 to 30)

Membrane-electrode assemblies for fuel cells were produced by the same method as in Example 16 except that the supports for the fuel cells of Examples 11 to 15 instead of the support for the fuel cell of Example 1 were added in Example 16.

### (Comparative Example 2)

A membrane-electrode assembly for a fuel cell was produced by the same method as in Example 16 except that the support for the fuel cell produced in Comparative Example 1 was added.

### [Evaluating characteristics of supports for fuel cells]

### (Experimental Example 1: XPS analysis evaluation)

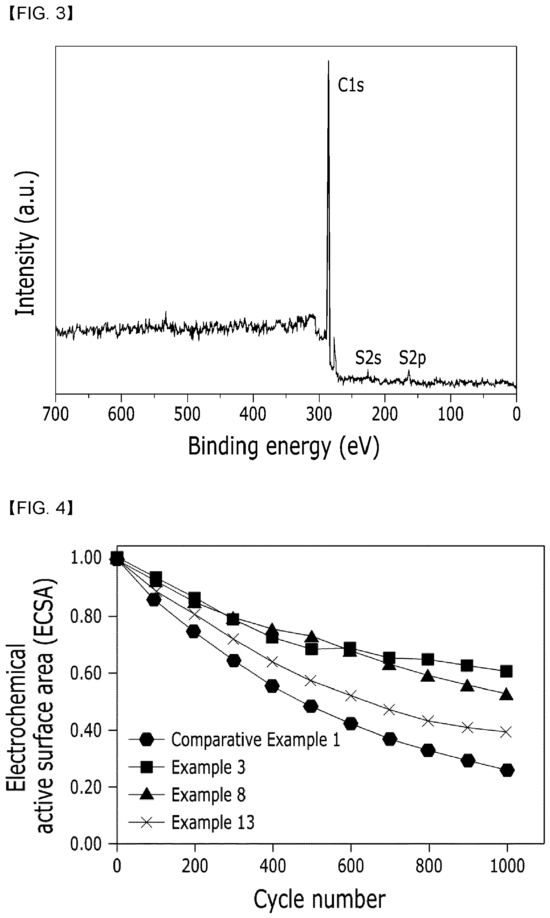

X-ray photoelectron spectroscopy (XPS) results of analyzing the supports for the fuel cells of Example 8 and Comparative Example 1 are compared and illustrated as shown in FIG. 3.

As shown in the results of FIG. 3, it can be seen that, although only a peak related to binding energy of C1s is exhibited in Comparative Example 1, peaks having S2s and S2p binding energies as well as the binding energy C1s are exhibited in the case of Example 8 of performing a diazonium coupling reaction by adding 8 mM of 4-aminobenzothiol, and a functional group including a sulfur atom is formed on a highly crystalline graphitized carbon support of Example 8 through such XPS results.

### (Experimental Example 2: Raman spectroscopic analysis)

Carbon components in the supports for the fuel cells of the Examples and Comparative Example were analyzed by analyzing the supports for the fuel cells of Examples 1, 8 and 13 and Comparative Example 1 with Raman spectrometer using a laser having a wavelength of 514 nm, and calculating a ratio (R_{D}/R_{G}) value of a maximum peak area (R_{D}) of D band at 1335 cm⁻¹ to 1365 cm⁻¹ to a maximum peak area (R_{G}) of G band at 1570 cm⁻¹ to 1600 cm⁻¹ among spectrums detected by Raman spectroscopy.

Example 1 has shown a ratio (R_{D}/R_{G}) value of 0.83, Example 8 has shown a ratio (R_{D}/R_{G}) value of 0.85, Example 13 has shown a ratio (R_{D}/R_{G}) value of 0.86, and Comparative Example 1 has shown a ratio (R_{D}/R_{G}) value of 0.81.

As described above, it could be checked that ratio (R_{D}/R_{G}) values of Examples 1, 8 and 13 and Comparative Example 1 were further increased through stepwise graphitization processes different from that of Comparative Example 1, and crystallinities of the Examples in which a diamond material phased carbon with a sp³ structure exhibited by the D band at 1335 cm⁻¹ to 1365 cm⁻¹ had been well formed were higher than that of the Comparative Example having more components of a graphite material phased carbon with a sp² structure exhibited by the G band at 1570 cm⁻¹ to 1600 cm⁻¹.

### (Experimental Example 3: Surface supporting evaluation of a diazonium salt)

The calculated nitrogen doping level values, doping ratio values and surface coverage values according to the p-phenylenediamine concentration values are shown as in the following table 1 after calculating nitrogen doping level values, doping ratio values and surface coverage values in ratio values of an Nls peak and a Cls peak according to concentrations of p-phenylenediamine with respect to the supports for the fuel cells on which the diazonium coupling reaction had been performed by adding each of 2, 4, 8, 16 and 32 mM of aqueous p-phenylenediamine solutions as in Examples 11 to 15.

**[Table 1]**

| | p-phenylenediamine concentration (mM) | Nitrogen (N) doping level (at.%) | Doping ratio (N/C) | Surface coverage (10⁻¹⁰ mol/cm²) |
|---|---|---|---|---|
| Example 11 | 2 | 1.19 | 0.0132 | 0.9636 |
| Example 12 | 4 | 2.76 | 0.0318 | 2.3239 |
| Example 13 | 8 | 3.24 | 0.0373 | 2.7229 |
| Example 14 | 16 | 3.68 | 0.0462 | 3.2796 |
| Example 15 | 32 | 3.80 | 0.0449 | 3.3731 |

As in Table 1, it can be checked that, as the concentration of p-phenylenediamine is increased to 2 mM to 32 mM, nitrogen surface doping level value (N-doping level value), doping ratio value and surface coverage value are increased to 1.19 to 3.80 at.%, 0.0132 to 0.0449, and 0.9636×10⁻¹⁰ to 3.3731×10⁻¹⁰ mol/cm² respectively.

### (Experimental Example 4: Evaluation of ECSA loss)

After obtaining ECSA loss evaluation results by evaluating losses of estimate electrochemically surface area (ECSA) values when using the supports for the fuel cells of Examples 3, 8 and 13 and Comparative Example 1, the ECSA loss evaluation results are shown in a graph of FIG. 4.

It was evaluated how much ECSA losses had been progressed while repeating 1,000 times of CV charge discharge cycles with respect to initial active areas of the supports of the Examples and Comparative Example. As shown in the results of FIG. 4, it can be seen that the support of Example 3 has the least active area loss, and is followed by the supports of Examples 8 and 13 having excellent electrochemical durability values compared to the support of Comparative Example 1.

### (Experimental Example 5: Evaluation of mass activities)

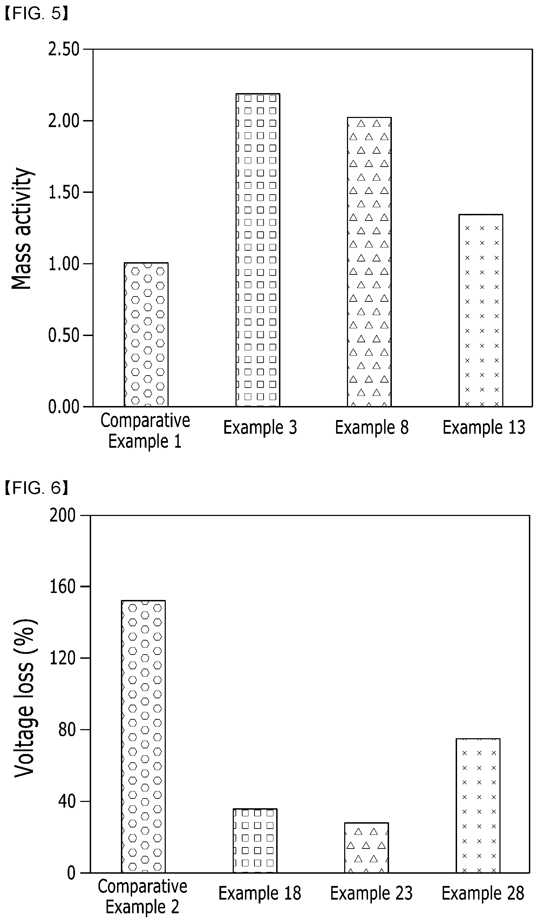

After obtaining mass activity evaluation results by evaluating mass activities when using the supports for the fuel cells of Examples 3, 8 and 13 and Comparative Example 1, the mass activity evaluation results are illustrated as shown in FIG. 5.

The mass activity evaluation results show that all of the supports of Examples 3, 8 and 13 exhibit higher mass activity values than the support of Comparative Example 1, and particularly the support of Example 3 on which a benzonitrile group as a functional group is supported has the most excellent mass activity value.

### [Performance evaluation of membrane-electrode assemblies and batteries]

### (Experimental Example 6: Voltage loss evaluation)

After performing a voltage cycle process 30,000 times using the membrane-electrode assemblies manufactured in Examples 18, 23 and 28 and Comparative Example 2, thereby testing AST protocol loss evaluation, AST protocol loss evaluation results are illustrated as shown in FIG. 6.

As checked in the evaluation results of FIG. 6, it can be seen that the membrane-electrode assembly of Example 23 has the highest VC durability value, and the membrane-electrode assemblies of Examples 18 and 27 also have lower voltage loss degrees than the membrane-electrode assembly of Comparative Example 2 due to durability reinforcement of a cathode catalyst.

**[Description of marks]**

| | |
|---|---|
| 100: Carbon particles including a highly crystalline graphitized layer | |
| 110: Carbon particles | 120: Highly crystalline graphitized layer |
| 130: Highly crystalline graphitized carbon support | |
| 200: Fuel cell | |
| 210: Fuel supply unit | 220: Reforming unit |
| 230: Stack | 231: First supply pipe |
| 232: Second supply pipe | 233: First discharge pipe |
| 234: Second discharge pipe | 240: Oxidizer supply unit |

### [Industrial Applicability]

Examples in which the method for transmitting and receiving data using an LTE-WLAN aggregation by a terminal in a wireless communication system according to an embodiment of the present invention has been applied to 3GPP LTE/LTE-A systems have been described, but the method may be applied to various wireless communication systems in addition to the 3GPP LTE/LTE-A systems.

## Claims

1. A highly crystalline graphitized carbon support including carbon particles including a highly crystalline graphitized layer, the highly crystalline graphitized layer comprising a functional group bonded to the surface thereof, the functional group comprising a compound represented by the following chemical formula 1:
[Chemical formula 1] -Ar-(R)ₙ
In chemical formula 1, Ar is alkylene or arylene, R are each independently a hydrogen atom or a substituent comprising any one hetero atom selected from the group consisting of nitrogen, sulfur and a mixture thereof, and n is an integer of 1 to 20.

2. The highly crystalline graphitized carbon support of claim 1, wherein the functional group is covered on the surface of the highly crystalline graphite in a surface coverage of 0.5 × 10⁻¹⁰ to 1.0 × 10⁻⁸ mol/cm².

3. The highly crystalline graphitized carbon support of claim 1, wherein the functional group has a doping level value of 0.7 to 15.0 at.% and an N/C or S/C ratio value of 0.005 to 0.500.

4. The highly crystalline graphitized carbon support of claim 1, wherein chemical formula 1 comprises an aromatic hydrocarbon represented by the following chemical formula 2: 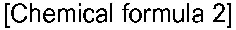 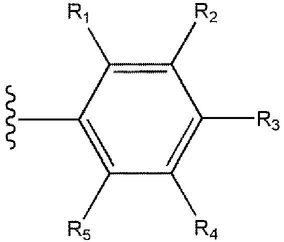 In chemical formula 2, R₁ to R₅ are each independently a hydrogen atom, or a substituent comprising any one hetero atom selected from the group consisting of nitrogen, sulfur and a mixture thereof.

5. The highly crystalline graphitized carbon support of claim 4, wherein at least one of R₁ to R₅ includes any one substituent selected from the group consisting of CN, SH, and NH₂.

6. The highly crystalline graphitized carbon support of claim 1, wherein a ratio value of a maximum peak area of D band at 1335 cm⁻¹ to 1365 cm⁻¹ to a maximum peak area of G band at 1570 cm⁻¹ to 1600 cm⁻¹ obtained by Raman spectroscopy using a laser with a wavelength of 514 nm of the highly crystalline graphitized carbon support is 0.1 to 1.2.

7. The highly crystalline graphitized carbon support of claim 1, wherein a peak with respect to a (002) surface in an X-ray diffraction (XRD) spectrum of the highly crystalline graphitized carbon support is exhibited at a bragg 2θ angle of 26°±0.5°, and the peak with respect to the (002) surface has a full width at half maximum (FWHM) value of 0.1° to 0.8°.

8. A production method of a highly crystalline graphitized carbon support, the production method comprising the steps of:
applying a stepwise heat treatment process to carbon particles to form a highly crystalline graphitized layer; and
coupling reacting the highly crystalline graphitized layer with a functional group-substituted diazonium salt to introduce an organic functional group into the highly crystalline graphitized layer.

9. The production method of claim 8, wherein the stepwise heat treatment process comprising:
a first step of increasing temperature of the carbon particles to 900 to 1,000 °C in a temperature increasing speed of 3 to 10 °C/min, and maintaining the temperature-increased carbon particles for 5 to 30 minutes;
a second step of increasing temperature of the carbon particles from 900 to 1,000 °C to 1,800 to 1,900 °C in a temperature increasing speed of 2 to 5 °C/min, and maintaining the temperature-increased carbon particles for 5 to 30 minutes; and
a third step of increasing temperature of the carbon particles from 1,800 to 1,900 °C to 2,000 to 3,000 °C in a temperature increasing speed of 1 to 3 °C/min, and maintaining the temperature-increased carbon particles for 10 minutes to 2 hours.

10. The production method of claim 8, wherein the functional group-substituted diazonium salt comprises a compound represented by the following chemical formula 3: 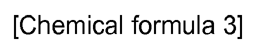 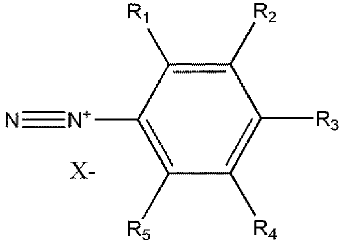 In chemical formula 3, R₁ to R₅ are each independently a hydrogen atom, or a substituent comprising any one hetero atom selected from the group consisting of nitrogen, sulfur and a mixture thereof, and X⁻ is a halogen group anion.

11. The production method of claim 8, wherein the functional group-substituted diazonium salt is produced by performing diazonitization of an aromatic primary amine compound represented by the following chemical formula 4: 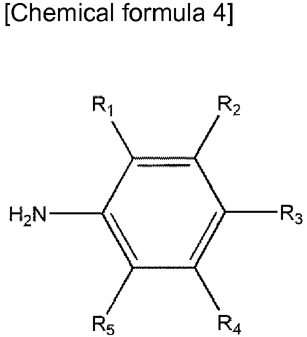 In chemical formula 4, R₁ to R₅ are each independently a hydrogen atom, or a substituent comprising any one hetero atom selected from the group consisting of nitrogen, sulfur and a mixture thereof.

12. The production method of claim 11, wherein the aromatic primary amine compound is any one selected from the group consisting of 4-aminobenzonitrile, 4-aminobenzothiol, p-phenylenediamine, and mixtures thereof.

13. The production method of claim 8, wherein the step of introducing the organic functional group into the highly crystalline graphitized layer is performed at 0 to 50 °C for 15 minutes to 24 hours.

14. An electrode for a fuel cell, the electrode including: the highly crystalline graphitized carbon support according to claim 1; and a catalyst supported on the support.

15. A membrane-electrode assembly for the fuel cell, the membrane-electrode assembly including: a cathode; an anode; and a polymer electrolyte membrane, at least one of the cathode and anode including the electrode according to claim 14.

16. The membrane-electrode assembly for the fuel cell of claim 15, wherein the cathode includes the electrode according to claim 14.

17. A fuel cell including the membrane-electrode assembly according to claim 15.
